Europäisches Patentamt

European Patent Office

Office européen des brevets

(11) Publication number: 0 512 638 A1

# EUROPEAN PATENT APPLICATION

(21) Application number: 92201250.5

(22) Date of filing: 04.05.92

(51) Int. Cl.⁵: F16D 3/22, E21B 17/20

(30) Priority: 03.05.91 CA 41808

(43) Date of publication of application:
11.11.92 Bulletin 92/46

(84) Designated Contracting States:
AT DE GB NL SE

(71) Applicant: CANADIAN FRACMASTER LTD
1800, 505 - 5th Street, S.W.
Calgary, Alberta, T2P 3J2(CA)

(72) Inventor: Godson, Gary
c/o 3347 58th Avenue, S.E.
Calgary, Alberta T2C 083(CA)
Inventor: Sihlis, Lennard
235-11th Street, N.W.
Calgary, Alberta T2N 1X2(CA)

(74) Representative: de Vries, Johannes Hendrik
Fokke
Octrooibureau Los en Stigter B.V. P.O. Box
20052
NL-1000 HB Amsterdam(NL)

(54) Drive shaft assembly.

(57) A flexible drive shaft assembly for drivably connecting driving and driven shafts, has for connection to each shaft, a flexible joint casing (1,3) with a socket receiving the end of a drive shaft (2), there being torque transmitting balls (11) received in hardened inserts (12,13), the inserts (12) being fixed in the perimeter of the shaft (2), the inserts (13) being axially slidable in slots (14) in the corresponding casing (1,3), and may be retained therein by an encircling collar (15). The end surfaces (5) of the shaft (2) and the mating end surfaces (4) of the casings (1,3) may be curved.

FIG. I

EP 0 512 638 A1

## FIELD OF THE INVENTION

The present invention relates to the field of directional drilling of oil and gas wells. In particular, the present invention provides a novel drive shaft and universal joint connection for the transmission of torque from a driving shaft, through an angle to a driven shaft.

## BACKGROUND OF THE INVENTION

When drilling for oil it is sometimes necessary to change the direction of drilling to approach certain oil bearing strata in a direction other than the vertical. This is accomplished by the use of an angulated housing just uphole of the drill bit called a bent sub. The bent sub may be fixed to continuously drill at a slight angle, up to about 2° from the direction of the drill string, or it may be adjustable. It will be understood, moreover, that when directional drilling is undertaken, it is substantially impossible to drill simply by rotation of the drill string, due to the fact that the drill string will not be in a straight line from the bit to the drill rig. Therefore, a large rotor-stator device called a mud motor is interposed between the drill string and the bit, just uphole of the bent sub. The mud motor includes a stator housing fixed to the drill string in a non-rotational relationship, encasing a rotatable turbine or rotor. Pressurized drilling mud is pumped down the hole and enters the uphole end of the stator, driving the encased rotor to effect rotation thereof. The rotating rotor of the mud motor is used to drive the drill bit. More specifically, the rotation of the rotor is used to drive a rotatable washpipe supported in a bearing assembly located just downhole of the bent sub. The drill bit is connected to the downhole end of the washpipe. The present flexible joint and drive shaft assembly is used to transmit the rotor's torque through the angle of the bent sub to the washpipe.

It will be appreciated that since the mud motor is axially offset from the drill bit by up to 2°, connection of one to the other will involve the transmission of high torque through an angle, which will create very high stresses on the joint utilized to do so. One universal joint to accomplish this transmission of torque from a mud motor to a drill bit is described in U.S. Patent No. 5,000,723, issued March 19, 1991 to Canadian Downhole Drill Systems Inc. Described therein is a universal joint including a shaft connected at each end to a coupler, the couplers being adapted for connection to a mud motor and a drill bit assembly. Between each end of the shaft and its respective coupling is located a thrust ball, being a fairly large diameter ball bearing captive in generally semi-spherical recesses formed in the end of the shaft and the coupler. At each end of the shaft, on the outer surface thereof, are found a regularly spaced series of axially elongated rounded pockets alignable with circular holes in the coupler. Ball bearings are inserted in the said holes in the coupler, which are then covered with threaded plugs, whereby the ball bearings are pressed into the elongated rounded pockets while remaining captive in the said holes. This arrangement permits tilting of the shaft relative to the coupler, the coupler being axially affixed to the rotor of a mud motor. With the shaft tilted in the coupler at a fixed angle, as determined by the angle of the bent sub, the shaft will turn with the rotor of the mud motor as it turns, with the torque of the motor being transferred to the shaft by the ball bearings captive between the plugged holes of the coupler and the elongated pockets on the shaft. As the shaft rotates, these ball bearings will shift up and down in the pockets, to compensate for the eccentric motion of the shaft relative to the coupler. The principle observed drawback of this arrangement is that the elongated pockets formed in the shaft tend to deform as they are subject to high load over time, and they tend to become somewhat bowed or even L-shaped, rather than axially elongate, as intended. This deformation of the pockets can cause jamming of the shaft in the coupler in the most severe cases, if the ball bearing is able to wedge itself between the shaft and the coupler, and even in less severe cases does not permit the smooth fast rotation of the shaft, as the ball bearings do not slide unobstructed up and down in their pockets if the pocket is not smooth.

## SUMMARY OF THE INVENTION

The applicant has discovered that the cause of the above-noted drawback to the known universal joints is the fact that the choice of an appropriate alloy for manufacture of the shaft does not yield a material with sufficient hardness to form a bearing surface for transmission of torque by a sliding ball bearing.

Accordingly, it is an object of the present invention to provide a flexible or universal joint for use between a mud motor and a bearing assembly which is provided with a shaft having relatively fixed torque transfer bearings.

A further object of the present invention is to provide a flexible joint and drive shaft assembly that overcomes the disadvantages of prior art joints and provides relatively smooth torque transfer through bearings captive in hardened inserts.

In a broad aspect, the present invention relates to a flexible joint and drive shaft assembly for driving a first, driven shaft by a second, driving shaft, said first and second shafts being offset from one another in one or more planes including: a first flexible joint casing adapted for connection to said first shaft coaxially therewith; b) a second flexible joint casing adapted for connection to said second shaft coaxially therewith; c) a drive shaft extending between said first and second joint casings, into sockets formed in said joint casings, the fit of said drive shaft into said sockets permitting tilting of said drive shaft into non-coaxial relationship with either of said joint casings; d) torque transfer means disposed between the ends of said drive shaft and said joint casings whereby rotation of a said first joint casing causes said drive shaft and said second joint casing to rotate; characterized in that said torque transfer means comprises a plurality of ball bearings seated in hardened inserts around the perimeter of each end of the drive shaft, each said insert being affixed in a corresponding recess formed in the surface of said drive shaft; and a plurality of hardened inserts around the perimeter of each said joint casing engaging said ball bearings in generally hemispherical recesses; said inserts in said joint casing being disposed in longitudinal slots to permit them to slide a short distance and thereby permit said drive shaft to tilt.

## BRIEF DESCRIPTION OF THE DRAWINGS

In drawings which illustrate a preferred embodiment of the present invention by way of example:

Figure 1 is a side view, partially in cross-section of a flexible joint and drive shaft assembly according to the present invention;

Figure 2 is a sectional view through section line II-II in Figure 1;

Figure 3 is a simplified top view of a joint casing hardened insert in a slot in a joint casing according to the present invention.

## DETAILED DESCRIPTION OF THE PREFERRED EMBODIMENTS

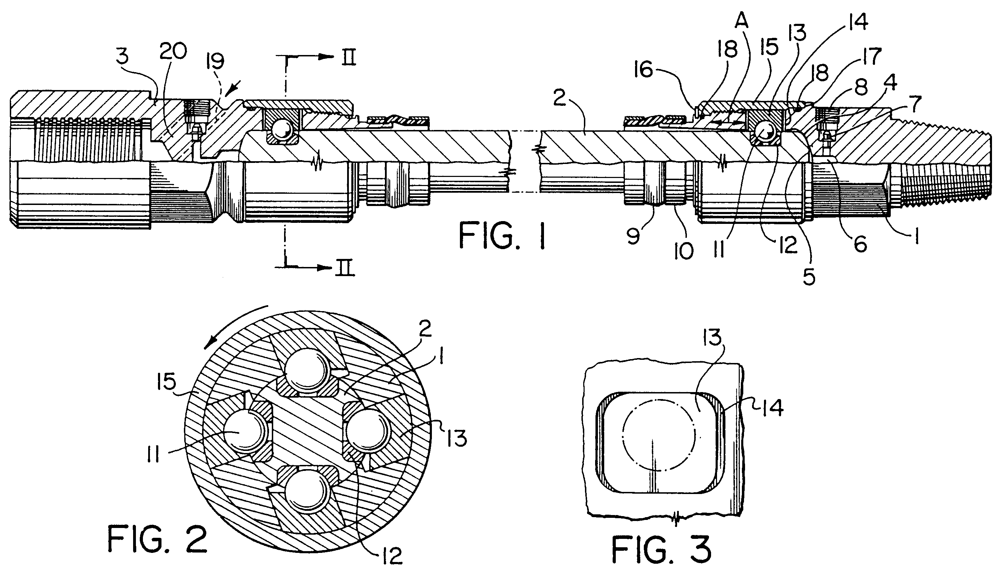

Referring now to the drawings, Figure 1 shows substantially an entire flexible joint and drive shaft arrangement according to the present invention. From top to bottom (uphole to downhole) the assembly comprises an upper joint casing 1, a drive shaft 2 and a lower joint casing 3.

Upper joint casing 1 is threaded at its upper end to engage the rotor of a rotor-stator mud motor, and is provided with a hollow interior socket to accept the drive shaft 2. It will be understood that the connection of the upper joint casing 1 to the drive shaft 2 is the same as the connection between the lower joint casing 3 and the drive shaft 2, so only the upper connection will be described in detail.

The inside diameter of the upper joint casing 1 is slightly greater than the outside diameter of the drive shaft 2, to permit slight pivoting of the drive shaft 2 in the joint casing 1, and the axially upper interior surface 4 of the joint casing 1 is curved with a radius of curvature $R_1$ slightly greater than a second radius of curvature $R_2$ of the end 5 of the drive shaft 2. This permits the drive shaft 2 to abut the interior surface 4 of the joint casing 1 while it tilts relative thereto without the necessity to interpose a thrust ball. A hollow lubricant chamber 6 is provided in the centre of the joint casing 1 above the curved interior surface, to lubricate the joint. The lubricant chamber 6 is accessed by a threaded plug 8. Lubricant such as heavy grease is retained within the space between the drive shaft 2 and the joint casing 1 (upper or lower) by means of a section of silicon or other suitable hose 9 clamped to the shaft 2 and the joint casing 1 by hose clamps 10. Hose 9 additionally serves to prevent the ingress of drilling mud into the interior socket of the joint casing. In the case of embodiments having relatively short shafts 2, a single section of hose 9 may extend from one joint casing to the other, and not be clamped to the shaft.

Torque is transmitted from the upper joint casing to the drive shaft 2 to cause it to rotate by means of a series of ball bearings 11 (preferably four) regularly spaced around the periphery of the drive shaft 2 within the joint casing 1. To prevent wear on the shaft 2 by pressure of the ball bearings 11, each bearing is seated in a hardened insert 12 which fits in a suitably dimensioned recess in the shaft. The inserts 12 in the shaft are circular and have an outside surface slightly below the outer surface of the shaft 2. The centre of each insert 12 is apertured to admit lubricant into a space below each ball bearing 11.

There are a corresponding number of hardened inserts 13 in the joint casing 1, with hemispherically curved inner surfaces to fit snugly against the ball bearings 11 that are seated in the hardened inserts 2 of the shaft. The joint casing inserts 13 are inserted in axially elongated slots 14 which permit the inserts 13 to slide up and down as indicated by arrow A as the joint casing 1 is rotated and the rotation of same causes rotation of the shaft 2. Since the shaft will be at a slight angle (1° or 2°) to the joint casing 1, it will be understood that ball bearings 11 that are axially fixed relative to the shaft 2 will continually shift up and down relative to the joint casing 1, one up and down shift for each rotation.

The hardened inserts 13 of the joint casing 1 (and hence the ball bearings 11) are held in place tightly against the hardened inserts 12 of the shaft 2 by means of a retainer collar 15 threaded onto the joint casing 1 below the insert 13 and extending over the slots holding the inserts and against a shoulder 17 formed in the joint casing 1.

The collar 15 is additionally held in place by a snap ring 16. Between the collar and the joint casing 1, both above and below the insert are located O-ring seals 18 in annular grooves in the joint casing 1.

Referring now to Figure 2, each of the hardened joint casing inserts 13 is generally rhombohedral in shape, and the slot 14 formed for each in joint casing 1 is accordingly inclined from the radial by about 15°. The applicant has found that by inclining the slots 14, and shaping the inserts to fit therein, the torsional forces on the joint casing walls are more evenly distributed as the joint casing rotates in the direction of the arrow in Figure 2, and the tendency of the inserts to twist within the slots 14 is reduced. As can be seen from Figure 3, the slot 14 is somewhat longer than the insert to permit the above-described up and down movement of the insert.

Referring again to Figure 1, it will be observed that at the downhole end of the drive shaft, the lower joint casing, below its lubricating chamber, is provided with a peripherally spaced series of inclined drilling mud inlets 19 which communicate by means of bores 20 with the interior of a washpipe (not illustrated). It will be understood that the downhole end of lower joint casing 3 threadingly engages the washpipe, with the outer casing of the bearing assembly being threadingly secured to the downhole end of the bent sub (not shown). The uphole end of the bent sub is connected to the stator portion of the mud motor, the bent sub forming a conduit around the flexible joint and drive shaft assembly for drilling mud passing through the mud motor.

The upper and lower joint casings 1 and 3, and the shaft are manufactured from solid steel preferably an alloy such as ASTALLOY™ available from Astralloy Wear Technology of Birmingham, Alabama. The hardened inserts 12, 13 are made from steel hardened to Rc60 to a depth of .03 inches.

It will be understood that the dimensions of the parts are capable of being varied by one skilled in the art, for adaptation to drilling equipment of different dimensions.

It is to be understood that the examples described above are not meant to limit the scope of the present invention. It is expected that numerous variants will be obvious to the person skilled in the field of downhole drilling technology, without any departure from the spirit of the present invention. The appended claims, properly construed, form the only limitation upon the scope of the present invention.

**Claims**

1.  A flexible joint and drive shaft assembly for driving a first, driven shaft by a second, driving shaft, said first and second shafts being offset from one another in one or more planes including:

    a) a first flexible joint casing adapted for connection to said first shaft coaxially therewith;

    b) a second flexible joint casing adapted for connection to said second shaft coaxially therewith;

    c) a drive shaft extending between said first and second joint casings, into sockets formed in said joint casings, the fit of said drive shaft into said sockets permitting tilting of said drive shaft into non-coaxial relationship with either of said joint casings;

    d) torque transfer means disposed between the ends of said drive shaft and said joint casings whereby rotation of a said first joint casing causes said drive shaft and said second joint casing to rotate;

    characterized in that

    said torque transfer means comprises a plurality of ball bearings seated in hardened inserts around the perimeter of each end of the drive shaft, each said insert being affixed in a corresponding recess formed in the surface of said drive shaft; and a plurality of hardened inserts around the perimeter of each said joint casing engaging said ball bearings in generally hemispherical recesses; said inserts in said joint casing being disposed in longitudinal slots to permit them to slide a short distance and thereby permit said drive shaft to tilt.

2.  A device as claimed in Claim 1, further characterized in that said joint casings are provided with collars threadingly engaging the ends thereof remote from said first and second shafts, said collars extending over said joint casing to cover the longitudinal slots containing said hardened inserts and thereby retain said inserts in place.

3.  A device as claimed in Claim 2, wherein each end of said drive shaft is curved and the innermost surface of each said joint casing socket is complimentarily curved to accept an end of said shaft and permit it to pivot smoothly.

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 141 225 (VARNER)<br>* column 6, line 21 - column 7, line 51; figures 9-13 *<br>--- | 1,3 | F16D3/22<br>E21B17/20 |
| Y | US-A-2 809 504 (ERISH)<br>* the whole document *<br>--- | 1,3 | |
| A | FR-A-1 230 646 (BERGE)<br>* the whole document *<br>--- | 2 | |
| Y | US-A-4 904 228 (FREAR)<br>* the whole document *<br>--- | 1,3 | |
| Y | US-A-2 427 237 (SUCZEK)<br>* the whole document *<br>----- | 1,3 | |
| | | | **TECHNICAL FIELDS SEARCHED (Int. Cl.5)**<br><br>F16D<br>F16C<br>E21B |

The present search report has been drawn up for all claims

| Place of search | Date of completion of the search | Examiner |
|---|---|---|
| THE HAGUE | 04 AUGUST 1992 | BALDWIN D. R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 01.82 (P0401)